# EUROPÄISCHE PATENTSCHRIFT

(11) **EP 3 465 441 B1**
(45) Veröffentlichungstag und Bekanntmachung des Hinweises auf die Patenterteilung: **25.03.2020**
(21) Anmeldenummer: 17721569.6
(22) Anmeldetag: 25.04.2017
(51) Int. Cl.: G06F 11/34, G06F 11/36, G06F 3/048, G06F 17/50

(54) **DESIGN AND TESTING OF VIRTUAL USER INTERFACES**
DESIGN UND TESTEN VON VIRTUELLEN NUTZERSCHNITTSTELLEN
DESIGN ET TEST DES INTERFACES UTILISATEUR VIRTUEL

(30) Priorität: 03.06.2016 DE 102016110321
(43) Veröffentlichungstag der Anmeldung: 10.04.2019
(73) Patentinhaber: Haug, Thomas, 75217 Birkenfeld (DE)
(72) Erfinder: Haug, Thomas, 75217 Birkenfeld (DE)
(74) Vertreter: Wacker, Jost Oliver
(86) Internationale Anmeldenummer: PCT/EP2017/059737
(87) Internationale Veröffentlichungsnummer: WO 2017/207171

(56) Entgegenhaltungen:
- US-A- 5 291 587
- US-A1- 2008 255 818
- Apple ET AL: "A Quick Tour of Xcode", , 28. August 2003 (2003-08-28), XP055387405, Gefunden im Internet: URL:https://www.ibr.cs.tu-bs.de/courses/ws 0708/pcn/Doku/XcodeQuickTour.pdf [gefunden am 2017-07-03]

## Beschreibung

Die Erfindung betrifft ein Computerprogrammprodukt zur Konfiguration eines benutzerspezifischen Produktes, wie insbesondere eines Fernbedienungsgerätes für Hub- und/oder Transportgeräte, nach dem Oberbegriff des Anspruchs 1. Das Computerprogrammprodukt ist hierzu auf einem mobilen Computer gespeichert und weist eine virtuelle Bibliothek mit mehreren auswählbaren virtuellen Komponenten auf. Die virtuellen Komponenten dienen dabei zur Zusammenstellung eines virtuellen Modells des Produktes, das an einem Display des mobilen Computers angezeigt werden kann. Hierbei werden auf Basis des angezeigten virtuellen Modells beziehungsweise auf Basis der hierfür ausgewählten Komponenten Produktinformationen mittels eines ersten Programmteils generiert, die zur Herstellung des reellen benutzerspezifischen Produktes verwendet werden können.

Derartige Computerprogrammprodukte zur Konfiguration individualisierter Produkte werden heute in vielen technischen Gebieten verwendet. Dabei ermöglichen die Computerprogrammprodukte den Interessenten eine benutzerspezifische Zusammenstellung und Visualisierung des jeweiligen Produktes, während der Anbieter aus den von den Interessenten angegebenen Informationen gleichzeitig alle Daten erhält, die die Herstellung des benutzerspezifischen Produktes ermöglichen.

US2008/0255818A1 beschreibt ein System zur computergestützten Erstellung einer Anlage, bei der mehrere Anlagenteile über Kabelverbindungen miteinander verbunden sind. Hierbei ist es möglich, die Anlage virtuell aus einer Bibliothek von gespeicherten Elementen zu erstellen und hieraus eine Bauteilliste abzuleiten. Ferner ist es möglich, die Anlage teilweise zu simulieren und die simulierten Teile gemeinsam mit real betriebenen Teilen der Anlage zu verbinden.
Der Artikel von JO, Domg-Sik; YANG, Ungyeon; SON, Wook-Ho: "Design evaluation System with visualization and interaction of mobile devices based on virtual reality prototypes." ETRI journal, 2008, 30. Jg., Nr. 6, S.757-764 beschreibt eine Computeranwendung zum Erstellen eines virtuellen Telefonmodells, das an einem Computerdisplay angezeigt wird. Die Tasten des Telefonmodells können dabei angesteuert werden, um Signale zu erzeugen, die beispielsweise eine Anzeige am Display des Telefons generieren. Zur Ansteuerung der Tasten dient dabei entweder ein Cursor oder eine am Computerdisplay angezeigte virtuelle Hand. Der Artikel von BACIC, Marko: "On hardware-in-the-loop simulation." Proceedings of the 44th IEEE Conference on Decision and Control. IEEE, 2005. S. 3194-3198 beschreibt verschiedene "Hardware in the loop"-Anordnungen, bei denen reale Kfz-Teile mit virtuellen Komponenten verbunden sind, um bestimmte Simulationen durchführen zu können

Apple ET AL: "A Quick Tour of XCode", 28. August 2003(2003-08-28), XP055387405, gefunden im Internet: URL:https://www.ibr.cs.tu-bs.de/courses/ws0708/pcn/Doku/XcodeQuickTour.pdf beschreibt ein Computerprogramm mittels dem Nutzerschnittstellen per Drag & Drop aus einer Bibliothek individuell erstellt werden können. Dabei ist es möglich, das virtuell erstellte Interface in einem Simulationsmode zu testen, bei dem dieses über den genutzten Computerarbeitsplatz angesteuert wird.

Ein grundsätzlicher Nachteil derartiger Konfigurationen beziehungsweise individualisierter Produkte an sich ist dabei der, dass diese erst nach einer bestimmten Herstellungszeit für den Interessenten zur Verfügung stehen. Je nach Art des herzustellenden Produktes kann sich dieser Zeitraum über mehrere Wochen oder Monate erstrecken. Zudem hat der Interessent erstmalig nach Herstellung des jeweiligen Produktes die Möglichkeit, dieses praktisch zu verwenden. In vielen Fällen können dabei erst bei diesen praktischen Anwendungen gewisse Unzulänglichkeiten der jeweiligen Konfiguration festgestellt werden, die aufgrund der bereits abgeschlossenen Produktherstellung jedoch nicht mehr oder nur mit sehr großem Aufwand behoben werden können.

Die Aufgabe der Erfindung ist es, eine Konfiguration von benutzerspezifischen Produkten zu ermöglichen, die diese Nachteile vermeidet.

Diese Aufgabe wird durch ein Computerprogrammprodukt mit den Merkmalen des Anspruchs 1 gelöst. Dabei ist das benutzerspezifische Produkt durch ein Fernbedienungsgerät gebildet. Zudem ist auf dem mobilen Computer wenigstens eine Funktionseinrichtung vorgesehen, die durch Fernsteuerungsmittel gebildet ist. Hierdurch ist es möglich, ein individuell konfiguriertes und am Display visualisiertes virtuelles Fernbedienungsgerät für die Fernsteuerung einer realen Empfangsvorrichtung, wie beispielsweise in Form eines Hub- oder Transportgerätes, zu verwenden. Dabei ist es günstig, wenn die Fernsteuerungsmittel zum Aussenden von Funk-, WLAN-, Infrarot-, und/oder Bluetooth-Signalen ausgelegt sind, um je nach Anwendungsfall, eine geeignete Signalübertragung zur Steuerung des betreffenden ferngesteuerten Gerätes zu ermöglichen. Di Funktionseinrichtung kann dabei über Touchbeaufschlagung des virtuellen Modells am berührungsempfindlichen Display angesteuert beziehungsweise betrieben werden . Hierbei ist das anzeigbare virtuelle Modell über ein zweites Programmteil mit der Funktionseinrichtung verbunden. Hierdurch ist es möglich, wenigstens eine Funktion des Computers anhand des individuell zusammengestellten und am berührungsempfindlichen Display des Computers angezeigten virtuellen Modells zu steuern. Auf diese Weise ist bereits das am Computer angezeigte virtuelle Modell zumindest eingeschränkt funktionsfähig und kann somit bereits vor der Herstellung des realen Produkts von dem Interessenten praktisch erprobt werden. Hierdurch bildet der mobile Computer mit dem an seinem berührungsempfindlichen Display angezeigten und steuerbaren virtuellen Modell ein Ersatzgerät, wie insbesondere ein Fernsteuerungsgerät, das physisch mitgeführt und haptisch erprobt werden kann. Beispielsweise kann im Falle eines individuell zusammengestellten Fernbedienungsgerätes auf diese Weise schon vor dessen Herstellung die gewünschte Anordnung verschiedener Funktionselemente bereits am virtuellen Modell hinsichtlich ihrer Praktikabilität getestet werden. Falls hierbei gewisse Unzulänglichkeiten festgestellt werden sollten, können bis zur tatsächlichen Herstellung des Produktes noch entsprechende Änderungen vorgenommen werden.

Vorteilhafterweise weisen die Fernsteuerungsmittel einen Transceiver auf, um sowohl das Senden als auch den Empfang von Signalen zu ermöglichen.

Zudem ist es günstig, wenn die auswählbaren Komponenten wenigstens einen virtuellen Joystick aufweisen. Hierdurch ist es möglich, bei der Konfiguration des benutzerspezifischen Fernbedienungsgerätes wenigstens einen Joystick hinsichtlich seiner Art und seiner Positionierung auszuwählen. Dabei kann die Bauart und Positionierung des ausgewählten Joysticks bereits vor der Herstellung des realen Fernbedienungsgerätes anhand des angezeigten virtuellen Modells beispielsweise hinsichtlich seiner Handhabbarkeit getestet werden.

Vorteilhafterweise weisen die auswählbaren Komponenten wenigstens einen virtuellen Druckknopf beziehungsweise eine virtuelle Taste und/oder einen Kippschalter auf. Hierdurch ist es anhand des am Computer angezeigten virtuellen Modells möglich, dass benutzerspezifische Fernbedienungsgerät noch vor dessen Herstellung beispielsweise hinsichtlich der Zugänglichkeit dieser Elemente zu testen.

Ferner ist es günstig, wenn die auswählbaren Komponenten wenigstens einen virtuellen Drehknopf und/oder Regler aufweisen. Auf diese Weise ist es beispielsweise möglich, anhand des am Computer angezeigten virtuellen Modells beispielsweise den für diese Elemente benötigten Bauraum noch vor Herstellung des realen Fernbedienungsgerätes zu testen.

In einer weiteren vorteilhaften Ausführungsform weisen die auswählbaren Komponenten wenigstens ein virtuelles Display auf, an dem seitens des mobilen Computers empfangene Informationen angezeigt werden können. Hierdurch ist es anhand des am Computer angezeigten virtuellen Modells möglich, insbesondere die Einsehbarkeit des an dem herzustellenden Fernbedienungsgerät vorgesehenen Displays zu testen.

Zudem ist es günstig, wenn die auswählbaren Komponenten wenigstens 2 unterschiedliche Fernsteuerungsgehäuse aufweisen, wodurch auch die äußere Form des benutzerspezifischen Fernbedienungsgerätes an die ausgewählten Bedienungskomponenten angepasst und vor Herstellung getestet werden kann.

In einer besonders vorteilhaften Ausführungsform ist der mobile Computer durch einen Tablet-PC oder ein Smartphone gebildet. Auf diese Weise kann das am Display des Computers angezeigte virtuelle Modell des benutzerspezifischen Produktes besonders komfortabel gehandhabt werden. Insbesondere im Falle eines angezeigten virtuellen Modells eines Fernbedienungsgerätes kann dieses dabei in einer Weise verwendet werden, die der Verwendung des herzustellenden realen Fernbedienungsgerätes sehr ähnlich ist. Somit ist bereits vor der tatsächlichen Herstellung des Fernbedienungsgerätes eine sehr realitätsnahe Verwendung desselben anhand seines virtuellen Modells möglich.

In den Figuren ist eine beispielhafte Ausführungsform der Erfindung dargestellt. Es zeigen:
- Figur 1: eine Ansicht eines tragbaren Computers mit einem darauf gespeicherten erfindungsgemäßen Computerprogrammprodukt und
- Figur 2: eine Ansicht des Computers gemäß Figur 1 mit einem darauf angezeigten virtuellen Modell eines Produktes.

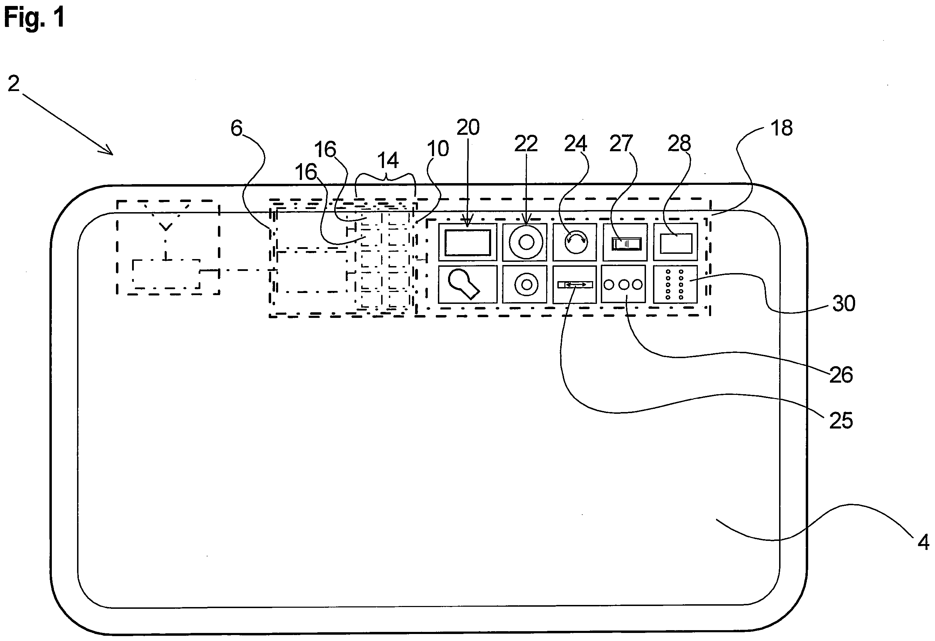

Fig. 1 zeigt einen tragbaren Computer 2 in Form eines Tabletcomputers oder eines Smartphones mit einem Display 4. Der Computer 2 weist dabei eine Elektronik 6 auf, in der ein Computerprogrammprodukt 10 gespeichert ist.

Dieses Computerprogrammprodukt 10 dient dabei zur Konfiguration eines benutzerspezifischen Produktes 12 in Form eines Fernbedienungsgerätes, das in Abhängigkeit der von einem Benutzer eingegebenen Informationen hergestellt werden kann. Hierzu weist das Computerprogrammprodukt 10 eine virtuelle Bibliothek 14 mit mehreren vorgegebenen, auswählbaren virtuellen Komponenten 16 auf, die in einem Wiedergabebereich 18 des Displays 4 angezeigt werden.

Die angezeigten virtuellen Komponenten 16 weisen dabei beispielsweise wenigstens zwei auswählbare unterschiedliche Fernsteuerungsgehäuse 20, wenigstens einen Joystick 22, wenigstens einen Drehknopf und/oder Schieberegler 24, wenigstens einen Druckknopf und/oder Kippschalter 26, wenigstens ein Gerätedisplay 28 und wenigstens eine Leuchtanzeige 30 auf.

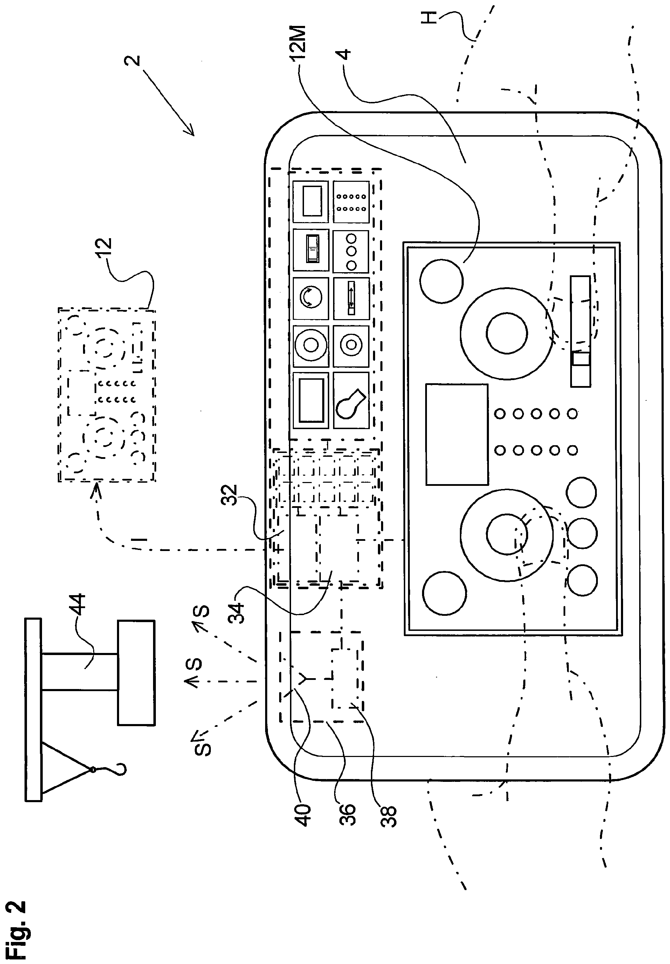

Durch Anklicken der gewünschten angezeigten Komponenten 16 beispielsweise mittels eines mausgesteuerten Cursors oder durch direkte Touch-Beaufschlagung des Wiedergabebereichs 18 kann dabei ein virtuelles Modell 12M des gewünschten Produktes 12 erstellt werden, das gemäß Figur 2 am Display 4 angezeigt wird. Dabei können die einzelnen ausgewählten Bedienungskomponenten nicht nur bestimmt, sondern auch an dem ausgewählten Fernsteuerungsgehäuse 20 positioniert werden.

Wie in Figur 2 ferner dargestellt, ist in dem Computerprogrammprodukt 10 zudem ein erstes Programmteil 32 vorgesehen, mittels dem aus den vom Anwender ausgewählten Komponenten 16 Produktionsinformationen erstellt werden. Diese Produktionsinformationen können dabei am Computer 2 ausgelesen oder, wie durch Pfeil I angedeutet, von diesem weitergeleitet und zur Herstellung des realen gewünschten Produktes 12 verwendet werden.

Ein zweites Programmteil 34 des Computerprogrammproduktes 10 dient ferner dazu, das am Display 4 angezeigte virtuelle Modell 12M mit einer Funktionseinrichtung 36 zu verbinden. Die Funktionseinrichtung 34 ist dabei als Fernsteuerungsmittel mit einem Transceiver 38 ausgebildet, um Signale S in Form von Funk-, WLAN-, Infrarot- und/oder Bluetooth-Signalen über eine Antenne 40 auszusenden und gegebenenfalls weitere Signale empfangen zu können.

Durch die programmtechnische Verbindung am Display 4 angezeigten virtuellen Modells 12M mit der Funktionseinrichtung 34 kann das virtuelle Modell 12M selbst genutzt werden, um Steuerungssignale zu generieren und an den Transceiver 38 der Funktionseinrichtung 34 weiter zu geben, von dem diese dann über die Antenne 40 ausgesendet werden können, um über die ausgesendeten Signale S einen Empfänger 44 zu steuern.

Die Erzeugung der Steuerungssignale erfolgt dabei, wie dargestellt, durch Beaufschlagung des am Display 4 angezeigten virtuellen Modells 12M des herzustellenden Produktes 12, wobei der Empfänger 44 beispielsweise durch ein fernsteuerbares Hub- und/oder Transportgerät gebildet sein kann.

Das am Computer 2 angezeigte virtuelle Modell 12M kann dadurch noch vor der Herstellung beziehungsweise der Fertigstellung des realen Produktes 12 in Form eines Fernbedienungsgerätes dazu verwendet werden, um das Hub- und/oder Transportgerät zu steuern beziehungsweise um die ausgewählte Konfiguration des Produktes 12 vorab zu testen und gegebenenfalls zu ändern.

## Patentansprüche

1. Computerprogrammprodukt (10) für die Konfiguration eines benutzerspezifischen Produktes (12),
das auf einem mobilen Computer (2) gespeichert ist und
eine virtuelle Bibliothek (14) mit mehreren auswählbaren virtuellen Komponenten (16) zur Zusammenstellung eines virtuellen Modells (12M) des Produktes (12) aufweist, das an einem Display (4) des mobilen Computers (2) anzeigbar ist,
wobei auf Basis der für das angezeigte virtuelle Modell (12M) ausgewählten Komponenten (16) mittels eines ersten Programmteils (32) Produktionsinformationen (I) zur Herstellung des reellen benutzerspezifischen Produktes (12) erstellt werden,
**dadurch gekennzeichnet, dass** das benutzerspezifische Produkt (12) durch ein Fernbedienungsgerät gebildet ist und auf dem mobilen Computer (2) wenigstens eine Funktionseinrichtung (36) vorgesehen ist, die durch Fernsteuerungsmittel zum Aussenden von Funk-, W-LAN, Infrarot- und/oder Bluetooth-Signalen (S) gebildet ist und die mittels Touchbedienung des virtuellen Modells (12M) am Display (4) ansteuerbar ist, wobei das Display (4) hierzu berührungsempfindlich ausgebildet ist und das anzeigbare virtuelle Modell (12M) über ein zweites Programmteil (34) mit der Funktionseinrichtung (36) verbunden ist.

2. Computerprogrammprodukt nach Anspruch 1, **dadurch gekennzeichnet, dass** die Fernsteuerungsmittel einen Transceiver (38) aufweisen.

3. Computerprogrammprodukt nach Anspruch 1 oder 2, **dadurch gekennzeichnet, dass** die auswählbaren Komponenten (16) wenigstens einen virtuellen Joystick (22) aufweisen.

4. Computerprogrammprodukt nach einem der Ansprüche 1 bis 3, **dadurch gekennzeichnet, dass** die auswählbaren Komponenten (16) wenigstens einen virtuellen Druckknopf (26) beziehungsweise eine virtuelle Taste und/oder einen Kippschalter (27) aufweisen.

5. Computerprogrammprodukt nach einem der Ansprüche 1 bis 4, **dadurch gekennzeichnet, dass** die auswählbaren Komponenten wenigstens einen virtuellen Drehknopf (24) und/oder Schieberegler (25) aufweisen.

6. Computerprogrammprodukt nach einem der Ansprüche 1 bis 5, **dadurch gekennzeichnet, dass** die auswählbaren Komponenten wenigstens ein virtuelles Gerätedisplay (28) aufweisen, an dem seitens des mobilen Computers (2) empfangene Informationen anzeigbar sind.

7. Computerprogrammprodukt nach einem der Ansprüche 1 bis 6, **dadurch gekennzeichnet, dass** die auswählbaren Komponenten (16) wenigstens zwei unterschiedliche Fernsteuerungsgehäuse (20) aufweisen.

8. Computerprogrammprodukt nach einem der Ansprüche 1 bis 7, **dadurch gekennzeichnet, dass** der mobile Computer (2) durch einen Tablet-PC oder ein Smartphone gebildet ist.

## Claims

1. Computer program product (10) for the configuration of a user-specific product (12),
which is stored on a mobile computer (2) and
and has a virtual library (14) with a plurality of selectable virtual components (16) for the compilation of a virtual model (12M) of the product (12), which can be shown on a display (4) of the mobile computer (2),
wherein product information (I) for the creation of the actual user-specific product (12) is derivable on the basis of the components (16) selected for the displayed virtual model (12M) by means of a first program part (32),
**characterised in that** the user-specific product (12) is formed by a remote control device and that at least one function device (36) is provided on the mobile computer (2), which is configured by remote control means so as to emit radio signals, W-LAN signals, infrared signals, and/or Bluetooth signals (S), and which can be actuated and controlled by means of touch operation of the virtual model (12M) on the display (4), wherein the display (4) is configured to be contact-sensitive for this purpose, and the virtual model (12M) which can be displayed is connected to the function device (36) by means of a second program part (34).

2. Computer program product according to claim 1, **characterised in that** the remote control means comprises a transceiver (38).

3. Computer program product according to claim 1 or 2, **characterised in that** the selectable components (16) comprise at least one virtual joystick (22).

4. Computer program product according to any one of claims 1 to 3, **characterised in that** the selectable components (16) comprise at least one virtual pushbutton (26) or, respectively, a virtual button and/or a rocker switch (27).

5. Computer program product according to any one of claims 1 to 4, **characterised in that** the selectable components comprise at least one virtual rotary knob (24) and/or linear regulator (25).

6. Computer program product according to any one of claims 1 to 5, **characterised in that** the selectable components comprise at least one virtual device display (28), at which received information can be displayed on the part of the mobile computer (2).

7. Computer program product according to any one of claims 1 to 6, **characterised in that** the selectable components (16) comprise at least two different remote control housings (20).

8. Computer program product according to any one of claims 1 to 7, **characterised in that** the mobile computer (2) is formed by a tablet PC or a smartphone.

## Revendications

1. Produit programme d'ordinateur (10) pour la configuration d'un produit (12) spécifique à l'utilisateur,
qui est enregistré dans un ordinateur portable (2) et
présente une bibliothèque virtuelle (14) comprenant plusieurs composants virtuels sélectionnables (16) pour l'assemblage d'un modèle virtuel (12M) du produit (12) pouvant être affiché sur un écran (4) de l'ordinateur portable (2),
dans lequel des informations de production (I) pour la fabrication du produit réel (12) spécifique à l'utilisateur peuvent être établies, au moyen d'une première partie de programme (32), sur la base des composants (16) sélectionnés pour le modèle virtuel (12M) affiché,
**caractérisé en ce que** le produit (12) spécifique à l'utilisateur est formé par un appareil de commande à distance et il est prévu sur l'ordinateur portable (2) au moins un dispositif fonctionnel (36) qui est formé par des moyens télécommandés pour l'envoi de signaux radio, Wi-Fi, infrarouge et/ou Bluetooth et qui peut être commandé sur l'écran (4) au moyen d'une commande tactile du modèle virtuel (12M), dans lequel l'écran (4) est agencé de manière sensible à la pression et le modèle virtuel (12M) affichable est connecté avec le dispositif fonctionnel (36) par une deuxième partie de programme (34).

2. Produit programme d'ordinateur selon la revendication 1, **caractérisé en ce que** les moyens télécommandés comprennent un émetteur-récepteur (38).

3. Produit programme d'ordinateur selon la revendication 1 ou 2, **caractérisé en ce que** les composants (16) sélectionnables comprennent au moins un joystick virtuel (22).

4. Produit programme d'ordinateur selon l'une des revendications 1 à 3, **caractérisé en ce que** les composants (16) sélectionnables comprennent au moins un bouton-poussoir virtuel (26) de préférence une touche virtuelle et/ou un interrupteur basculant (27).

5. Produit programme d'ordinateur selon l'une des revendications 1 à 4, **caractérisé en ce que** les composants sélectionnables comprennent au moins un bouton tournant virtuel (24) et/ou un régulateur à coulisse (25).

6. Produit programme d'ordinateur selon l'une des revendications 1 à 5, **caractérisé en ce que** les composants sélectionnables comprennent au moins un écran d'appareil virtuel (28), sur lequel sont affichées des informations reçues de la part de l'ordinateur portable (2).

7. Produit programme d'ordinateur selon l'une des revendications 1 à 6, **caractérisé en ce que** les composants (16) sélectionnables comprennent au moins deux boîtiers de télécommande (20) différents.

8. Produit programme d'ordinateur selon l'une des revendications 1 à 7, **caractérisé en ce que** l'ordinateur portable (2) est formé par une tablette tactile ou un smartphone.
